# EUROPÄISCHE PATENTSCHRIFT

(11) **EP 1 299 169 B1**
(45) Veröffentlichungstag und Bekanntmachung des Hinweises auf die Patenterteilung: **28.11.2007**
(21) Anmeldenummer: 01947413.9
(22) Anmeldetag: 27.06.2001
(51) Int. Cl.: B01D 29/48, B01D 35/02

(54) **FILTERTEIL FÜR FLUIDLEITUNGEN**
FILTER PART FOR FLUID PIPES
PARTIE FILTRANTE POUR CONDUITES FLUIDIQUES

(30) Priorität: 27.06.2000 DE 20010933 U
(43) Veröffentlichungstag der Anmeldung: 09.04.2003
(73) Patentinhaber: Weh, Erwin, D-89257 Illertissen (DE); Weh, Wolfgang, D-89257 Illertissen (DE)
(72) Erfinder: Weh, Erwin, D-89257 Illertissen (DE); Weh, Wolfgang, D-89257 Illertissen (DE)
(74) Vertreter: Fiener, Josef
(86) Internationale Anmeldenummer: PCT/EP2001/007350
(87) Internationale Veröffentlichungsnummer: WO 2002/000322

(56) Entgegenhaltungen:
- GB-A- 126 586
- GB-A- 282 846
- GB-A- 2 139 518
- US-A- 2 068 837
- US-A- 5 059 320
- US-A- 5 951 728
- PATENT ABSTRACTS OF JAPAN vol. 1997, no. 02, 28. Februar 1997 (1997-02-28) & JP 08 252411 A (NGK INSULATORS LTD), 1. Oktober 1996 (1996-10-01)

## Beschreibung

Die Erfindung betrifft einen Befüllnippel mit den Oberbegrifflichen Merkmalen des Anspruches 1.

Ein derartiger Befüllnippel ist aus der US-A-5,951,728 bekannt. Filterteile für Fluidleitungen sind im Rohrleitungsbau in breiter Verwendung, insbesondere zur Ausfilterung von Fremdkörpern und Schmutzpartikeln. Diese Filterteile weisen häufig eine Hülsenform auf, in der mehrere Durchlaßöffnungen vorgesehen sind (vgl. z.B US-A-5,059,320 oder GB 282 846 A). Diese Durchbrüche werden im allgemeinen von einem Filterelement Überdeckt, das als Gewebe oder als Metallgeflecht ausgebildet ist. Häufig werden auch Lochbleche oder Sinterkörper mit einer definierten Porösität als Filterelement verwendet, insbesondere in der Pneumatik und Hydraulik. Diese Filterelemente, insbesondere Metallgewebe und -geflechte weisen jedoch gewisse Unregelmäßigkeiten in den Maschenweiten auf. Zudem sind diese Filterelemente häufig empfindlich gegen Druckstöße oder Wechselbelastungen, so daß dies zu Materialermüdung führen kann. Insbesondere bei Befüllnippeln für die Erdgasbetankung von Fahrzeugen liegen erschwerte Verhältnisse vor, da dort bei einem Fülldruck von 200 bar und mehr das Filterteil erheblich belastet wird.

Demzufolge liegt der Erfindung die Aufgabe zugrunde, einen einfachen und belastbaren Filterteil Befüllnippel mit einem zu schaffen, das zudem mit variablen Durchlaßgraden hergestellt werden kann.

Diese Aufgabe wird gelöst durch einen Befüllnippel gemäß den Merkmalen des Anspruches 1. Bevorzugte Ausführungsformen sind Gegenstand der Unteransprüche.

Durch die Fertigung des Filterelementes aus einem eng gewickelten Federdraht sind aufwendige Herstellungsverfahren wie das Ausstanzen der kleinen Durchlaßöffnungen oder die Geflechtherstellung zu vermeiden. Vielmehr kann das Filterelement durch einen einfachen Wickelvorgang mit hoher Präzision hergestellt werden. Von besonderem Vorteil ist hierbei, daß die Wickelvorspannung des Federdrahtes variabel ist, so daß der Durchlaßgrad des Filterelementes bei der Herstellung in einfacher Weise auf den jeweiligen Einsatzzweck angepaßt werden kann. Durch die Ausbildung des Filterelementes als Feder ergibt sich zudem eine hohe Stabilität, so daß dieses Filterteil in Befüllnippeln für die Erdgasbetankung eingesetzt werden kann. Eine besonders hohe Stabilität ergibt sich hierbei durch eine kegelförmige oder konische Außenform, wobei sich das wicklungsende breitflächig an einem umlaufenden Ring-Bund am Filterende abstützen kann, um der hohen Druckbelastung standzuhalten.

Die sichere Fixierung und Abstützung des Filterelementes am Filterteil ergibt sich durch die Festlegung des Wicklungsendes des Federdrahtes an einem Ring-Bund des Grundkörpers. Hierdurch wird das Filterelement in Form einer Feder sicher und breitflächig am umlaufenden Ring-Bund abgestützt, so daß auch bei hohen Drücken eine exakte Lagerung gegeben ist.

In bevorzugter Ausführungsform können dabei die einzelnen Wicklungen des Federdrahtes in entsprechend ausgebildete Rillen des Grundkörpers eingreifen, wodurch sich eine exakte Fixierung der einzelnen Wicklungen ergibt. Hierdurch werden die Durchlaßspalte zwischen den eng aneinander anliegenden Wicklungen exakt definiert, so daß eine hohe Gleichmäßigkeit des Filterdurchlaßgrades erzielt werden. In bevorzugter Ausführungsform kann dabei die Wickelvorspannung des Federdrahtes auch noch nach der Herstellung einstellbar sein, beispielsweise durch Verdrehen des Filterkopfes gegenüber dem Filterfuß. Bei Verdrehen in Wickelrichtung ergibt sich dabei eine geringfügige Durchmesserverkleinerung, so daß die einzelnen Wicklungen stärker aneinander anliegen. Hierdurch wird der Durchlaßquerschnitt des Filterelementes verringert. In entgegengesetzter Weise, nämlich durch Drehen entgegen der Wickelrichtung kann dabei der Durchlaßquerschnitt zwischen den einzelnen Wicklungen etwas vergrößert werden, so daß sich hierdurch eine Vergrößerung des Durchlaßgrades ergibt. Diese Vorgehensweise kann insbesondere auch zur Reinigung des Filterelementes sinnvoll sein, da hierdurch Verschmutzungen und Ablagerungen am Filterelement abgesprengt werden.

Zur Optimierung der strömungsverhältnisse kann auch die Spitze bzw. der Filterkopf des Filterteils abgerundet sein. Hierdurch wird auch eine Geräuschbildung beim Fluiddurchfluß weitgehend vermieden.

Nachfolgend wird ein Ausführungsbeispiel anhand der Zeichnung näher erläutert und beschrieben. Hierbei zeigt:

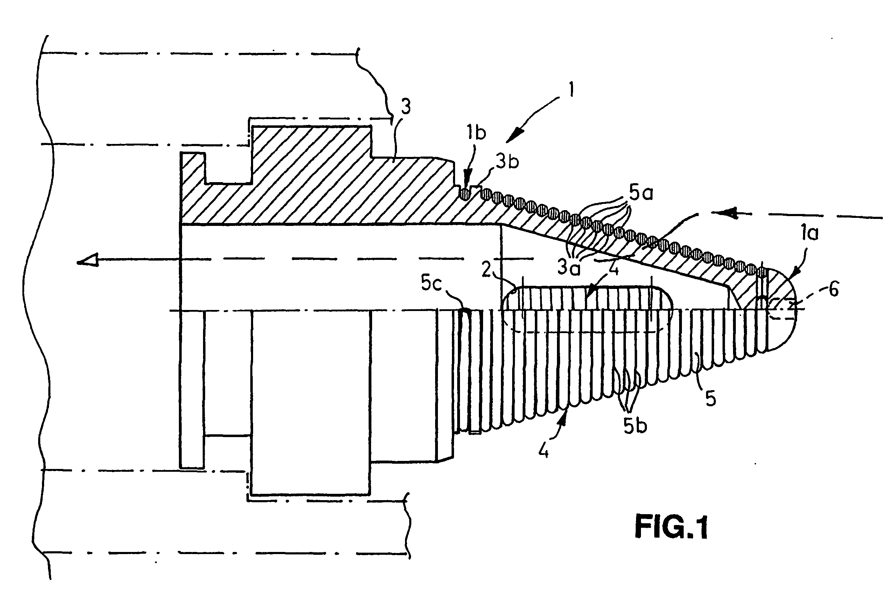

- Fig. 1: einen Halb-Längsschnitt durch ein Filterteil für Fluidleitungen.

In der (einzigen) Fig. 1 ist ein Filterteil 1 dargestellt, das wenigstens eine Fluid-Durchlaßöffnung 2 in einem Grundkörper 3 aufweist, der in einem strichpunktiert angedeuteten Befüllnippel eingesetzt wird. Im allgemeinen sind mehrere derartiger Durchlaßöffnungen 2 vorgesehen, insbesondere gleichmäßig am Umfang verteilt. Die Fluid-Durchlaßöffnungen 2 sind hierbei von einem Filterelement 4 überdeckt, das aus einem eng gewickelten Federdraht 5 besteht. Diese Feder als Filterelement 4 weist eine Vielzahl von eng aneinanderliegenden Wicklungen 5a auf, die zwischen sich jeweils im wesentlichen radial verlaufende Durchlaßspalte 5b bilden. Der Fluiddurchfluß ist hierbei in Strichlinien angedeutet.

Wie ersichtlich, weist das Filterelement 4 im wesentlichen eine konische oder kegelförmige Außenform auf. Dabei sind die Wicklungen 5a des Federdrahtes 5 in korrespondierend ausgebildeten Rillen 3a des Grundkörpers 3 eingreifend dargestellt, so daß sich eine exakte Fixierung der Feder ergibt. Hierdurch wird die Gleichmäßigkeit der Durchlaßspalte 5b erhöht.

Die Wicklungsenden 5c sind einmal am Filterfuß 1b und einmal am Filterkopf 1a gelagert. Für den Filterfuß 1b ist hierbei am Grundkörper 3 ein umlaufender Ring-Bund 3b vorgesehen, wodurch das größere Wicklungsende 5c des Federdrahtes exakt fixiert und breitflächig abgestützt ist, um den hohen Axialdrücken standzuhalten und ein Lösen oder Aufweiten des Filterelementes 4 gegenüber dem Grundkörper 3 zu vermeiden.

Am Filterkopf 1a, der bevorzugt aus strömungstechnischen Gründen abgerundet ausgebildet ist, kann hierbei ein Verdrehprofil 6, z.B. ein Innensechskant-Gewinde vorgesehen sein, mit dem der Filterkopf 1a gegenüber dem Grundkörper 3 begrenzt verdrehbar ist. Hierdurch werden je nach Drehrichtung die Wicklungen 5a des Federdrahtes 5 enger oder weiter aneinander angelegt. Bei Drehung entgegen der Wickelrichtung mit einer Steigung von einigen Winkelgraden (vgl. die im Schnitt ersichtliche Steigung des Federdrahtes 5 über der Fluid-Durchlaßöffnung 2) wird der Abstand zwischen den Wicklungen 5a geringfügig vergrößert, so daß sich ein höherer Durchlaßgrad ergibt. Dies ist insbesondere für Reinigungszwecke besonders vorteilhaft.

Der Federdraht 5 des Filterelementes 4 ist hierbei bevorzugt aus rostfreiem, insbesondere austenitischem Stahl hergestellt, da hierdurch eine hohe Korrosions- und Temperaturbeständigkeit erreicht werden kann. Dieser Stahl ist zudem relativ einfach mit hoher Formbeständigkeit zu wickeln, so daß hierdurch die Gleichmäßigkeit der Durchlaßspalte 5b und der Abstützung des Wicklungsendes 5c am Ring-Bund 3b mit hoher Wiederholgenauigkeit eingehalten werden kann. Entsprechendes gilt für hochwertige Federstähle.

## Patentansprüche

1. Befüllnippel, insbesondere für die Erdgasbetankung von Fahrzeugen, umfassend ein Filterteil (1) mit einem konischen Grundkörper (3) und wenigstens eine Durchlassöffnung (2), die von einem Filterelement (4) mit einer kegelförmigen Außenform überdeckt Ist,
**dadurch gekennzeichnet, dass**
das Filterelement (4) aus einem eng gewickelten Federdraht (5) besteht und in den Befüllnippel eingesetzt ist, wobei am durchmessergrößeren Filterfuß (1b) ein Ring-Bund (3b) am Grundkörper (3) vorgesehen ist, an dem ein Wicklungsende (5c) des Federdrahtes (5) in Axialrichtung abgestützt ist.

2. Befüllnippel nach Anspruch 1, **dadurch gekennzeichnet, dass**
die Wicklungen (5a) des Federdrahtes (5) in Rillen (3a) des Grundkörpers (3) eingreifend ausgebildet sind.

3. Befüllnippel nach Anspruch 1 oder 2, **dadurch gekennzeichnet, dass**
die Wickelvorspannung des Federdrahtes (5) variabel ist.

4. Befüllnippel nach Anspruch 3, **dadurch gekennzeichnet, dass**
die Wickelvorspannung des Federdrahtes (5) einstellbar ist.

5. Befüllnippel nach Anspruch 4, **dadurch gekennzeichnet, dass**
die Wickelvorspannung mit einem Verdrehprofil (6) am Filterkopf (1a) einstellbar ist.

6. Befüllnippel nach einem der Ansprüche 1 bis 5, **dadurch gekennzeichnet, dass**
der Federdraht (5) aus rostfreiem, austenitischem Stahl besteht.

7. Befüllnippel nach einem der Ansprüche 1 bis 6, **dadurch gekennzeichnet, dass**
der Fluid-Durchlaß von außen nach innen gerichtet ist.

8. Befüllnippel nach einem der Ansprüche 1 bis 7, **dadurch gekennzeichnet, dass**
die Spitze bzw. der durchmesserkleinere Filterkopf (1a) des Filterteils (1) abgerundet ist.

## Claims

1. A filling nipple, especially for refuelling vehicles with natural gas, comprising a filter part (1) having a cone-shaped base body (3) and at least one passage opening (2) which is covered by a filter element (4) having a conical outside shape,
**characterized in that**
the filter element (4) consists of a narrowly wound spring wire (5) and is inserted into the filling nippel, a collar ring (3b) being provided at the larger-diameter filter foot (1 b) on the base body (3) on which one winding end (5c) of the spring wire (5) is supported in the axial direction.

2. A filling nipple as claimed in claim 1, **characterized in that** the windings (5a) of the spring wire (5) are arranged as to engage in grooves (3a) of the base body (3).

3. A filling nipple as claimed in one of the claims 1 or 2, **characterized in that** the winding pretension of the spring wire (5) is variable.

4. A filling nipple as claimed in claim 3, **characterized in that** the winding pretension of the spring wire (5) is adjustable.

5. A filling nipple as claimed in claim 4, **characterized in that** the winding pretension is adjustable with a twister profile (6) on the filter head (1a).

6. A filling nipple as claimed in one of the claims 1 to 5, **characterized in that** the spring wire (5) consists of stainless, austenitic steel.

7. A filling nipple as claimed in one of the claims 1 to 6, **characterized in that** the fluid passage is directed from the outside to the inside.

8. A filling nipple as claimed in one of the claims 1 to 7, **characterized in that** the tip or the smaller-diameter filter head (1a) of the filter part (1) is rounded off.

## Revendications

1. Mamelon de remplissage, en particulier pour le remplissage de gaz naturel des véhicules automobiles, comprenant une partie filtrante (1) avec un corps de base conique (3) et au moins un orifice de passage (2) qui est recouvert par un élément filtrant (4) ayant une forme extérieure conique,
**caractérisé en ce que**
l'élément filtrant (4) est formé d'un fil d'acier à ressort (5) étroitement enroulé et est introduit dans le mamelon de remplissage, un épaulement annulaire (3b) étant prévu à la base du filtre (1b) de diamètre supérieur sur le corps de base (3), contre lequel s'appuie une extrémité de bobinage (5c) du fil d'acier à ressort (5) dans le sens axial.

2. Mamelon de remplissage selon la revendication 1, **caractérisé en ce que** les bobinages (5a) du fil d'acier à ressort (5) sont réalisés de manière à être en prise dans des rainures (3a) du corps de base (3).

3. Mamelon de remplissage selon la revendication 1 ou 2, **caractérisé en ce que** la prétension de bobinage du fil d'acier à ressort (5) est variable.

4. Mamelon de remplissage selon la revendication 3, **caractérisé en ce que** la prétension de bobinage du fil d'acier à ressort (5) est réglable.

5. Mamelon de remplissage selon la revendication 4, **caractérisé en ce que** la prétension de bobinage est réglable avec un profilé de torsion (6) sur la tête filtrante (1a).

6. Mamelon de remplissage selon l'une quelconque des revendications 1 à 5, **caractérisé en ce que** le fil d'acier à ressort (5) est en acier inoxydable austénitique.

7. Mamelon de remplissage selon l'une quelconque des revendications 1 à 6, **caractérisé en ce que** le passage de fluide est dirigé de l'extérieur vers l'intérieur.

8. Mamelon de remplissage selon l'une quelconque des revendications 1 à 7, **caractérisé en ce que** la pointe et/ou la tête filtrante (1a) de diamètre inférieur de la partie filtrante (1) est arrondie.
